# DEMANDE DE BREVET EUROPEEN

(11) **EP 2 942 689 A1**
(43) Date de publication de la demande: **11.11.2015**
(21) Numéro de dépôt: 15166160.0
(22) Date de dépôt: 04.05.2015
(51) Int. Cl.: G05D 23/19, G01K 17/20

(54) **DISPOSITIF THERMIQUE AMÉLIORÉ**

(30) Priorité: 05.05.2014 FR 1454066
(71) Demandeur: Ecometering, 92400 Courbevoie (FR)
(72) Inventeur: Lhour, Yann-Edern, 92400 COURBEVOIE (FR); Jorandon, Jean-Charles, 91210 DRAVEIL (FR)
(74) Mandataire: Cabinet Netter

(57) **Abrégé**

Un dispositif de gestion thermique (2) comprend un processeur, une entrée pour des données de température de consigne, de température intérieure, de température extérieure, et de rayonnement thermique extérieur, une sortie pour des données de durée, et un stockage recevant des données de modèle électrique de type RC des échanges thermiques d'un bâtiment (4) dans lequel la température est assimilée à une tension et le rayonnement thermique à une intensité et dans lequel une température intérieure et une température de chauffage sont utilisées comme variables d'état, le modèle comprenant un premier circuit et un second circuit interconnectés, le premier circuit représentant les échanges thermiques à l'intérieur du bâtiment et mettant en oeuvre une capacité thermique de chauffage, une résistance thermique intérieur-chauffage, une capacité thermique intérieure, et une source de rayonnement thermique de chauffage, le deuxième circuit représentant les échanges thermiques avec l'extérieur du bâtiment (4) et mettant en oeuvre au moins une source de rayonnement thermique extérieur, une source de température extérieure et une résistance thermique, le processeur étant adapté pour appliquer le modèle RC avec les données de température intérieure, de température extérieure et de rayonnement thermique extérieur reçus en entrée pour déterminer une durée restante jusqu'à obtention d'une température correspondant aux données de température de consigne reçue en entrée, et pour retourner sur la sortie des données de durée restante.

## Description

L'invention concerne le domaine de la domotique, et en particulier la gestion thermique.

La gestion énergétique est un domaine de la domotique qui se développe du fait de l'augmentation du coût de l'énergie, en particulier en ce qui concerne le chauffage des logements. Ainsi, de plus en plus de logements présentent des thermostats pour contrôler la consommation électrique et/ou de gaz (ou d'un autre type d'énergie) tout en assurant un confort optimal.

Cependant, les systèmes de thermostats sont peu pratiques à l'utilisation. En effet, ils permettent de commander un équipement pour atteindre une température de consigne, mais ils ne permettent ni de savoir en combien de temps cette consigne sera atteinte, ni même s'il est possible de l'atteindre.

Par exemple, dans le cas des thermostats permettant d'indiquer une température dite de jour (lorsque l'habitant est présent) et une température de nuit (lorsque l'habitant est absent), la différence entre ces deux consignes peut être impossible à combler dans les plages horaires allouées. Cela rend le thermostat inefficace. De plus, comme il n'est pas possible de savoir quelle est la durée nécessaire à atteindre une température donnée, de nombreux utilisateurs entrent une consigne supérieure à celle réellement recherchée, dans l'espoir d'accélérer le chauffage.

Récemment, certains efforts ont été faits afin de proposer des thermostats affichant une durée jusqu'à ce qu'une température de consigne soit atteinte. Cependant, ces dispositifs sont basés sur l'apprentissage d'un modèle de manière statistique. Il faut donc de longues semaines d'apprentissage, et, dès que les conditions extérieures changent, les performances deviennent insatisfaisantes.

Il existe donc un besoin d'améliorer la gestion de la température des habitations, au moins en ce qui concerne la possibilité de connaître le temps nécessaire pour passer d'une température à une autre.

L'invention améliore la situation en proposant un dispositif de gestion thermique qui comprend un processeur, une entrée pour des données de température de consigne, de température intérieure, de température extérieure, et de rayonnement thermique extérieur, une sortie pour des données de durée, et un stockage recevant des données de modèle électrique de type RC des échanges thermiques d'un bâtiment dans lequel la température est assimilée à une tension et le rayonnement thermique à une intensité et dans lequel une température intérieure et une température de chauffage sont utilisées comme variables d'état, le modèle comprenant un premier circuit et un second circuit interconnectés, le premier circuit représentant les échanges thermiques à l'intérieur du bâtiment et mettant en oeuvre une capacité thermique de chauffage, une résistance thermique intérieur-chauffage, une capacité thermique intérieure, et une source de rayonnement thermique de chauffage, le deuxième circuit représentant les échanges thermiques avec l'extérieur du bâtiment et mettant en oeuvre au moins une source de rayonnement thermique extérieur, une source de température extérieure et une résistance thermique, le processeur étant adapté pour appliquer le modèle RC avec les données de température intérieure, de température extérieure et de rayonnement thermique extérieur reçus en entrée pour déterminer une durée restante jusqu'à obtention d'une température correspondant aux données de température de consigne reçue en entrée, et pour retourner sur la sortie des données de durée restante

Ce dispositif est très avantageux car il permet, à travers un modèle physique, de pouvoir s'adapter à toutes les conditions. De plus, les besoins liés au paramétrage sont réduits de manière conséquente.

Selon les variantes, le dispositif pourra présenter une ou plusieurs des caractéristiques suivantes :
- dans le deuxième circuit, la source de rayonnement thermique extérieur et la source de température extérieure sont en parallèle,
- dans le deuxième circuit, la résistance thermique est une résistance thermique intérieur-extérieur disposées entre la source de rayonnement thermique extérieur et la source de température extérieure,
- le deuxième circuit comprend en outre une capacité thermique d'enveloppe et une résistance thermique enveloppe-extérieur, la résistance thermique étant une résistance thermique intérieur-enveloppe, la résistance thermique intérieur-enveloppe et la résistance thermique enveloppe-extérieur étant disposées en série entre la source de rayonnement thermique extérieur et la source de température extérieure, et la capacité thermique d'enveloppe étant en parallèle avec la source de rayonnement thermique extérieur et la source de température extérieure et reliée entre la résistance thermique intérieur-enveloppe et la résistance thermique enveloppe-extérieur,
- dans le premier circuit, la capacité de chauffage et la résistance thermique intérieur-chauffage sont en série, la capacité thermique intérieure étant disposée en parallèle avec ces dernières, et la source de rayonnement thermique de chauffage étant relié en parallèle à la capacité thermique de chauffage aux bornes de celle-ci,
- le premier circuit et le deuxième circuit présentent une masse commune,
- le dispositif est agencé pour communiquer avec un serveur pour déterminer des paramètres du modèle RC et/ou pour recevoir des données de rayonnement thermique extérieur et/ou de température extérieure,
- le processeur est agencé pour déterminer des paramètres du modèle RC et/ou pour recevoir des données de rayonnement thermique extérieur et/ou de température extérieure de capteurs à proximité du bâtiment,
- le processeur est agencé pour émettre une consigne de chauffage en fonction d'une température de consigne et d'une heure de consigne, sur la base de la comparaison entre la durée déterminée par le processeur pour atteindre la température de consigne et de la différence entre l'heure de consigne et l'heure courante, et
- le processeur est agencé pour vérifier la compatibilité entre deux températures de consignes correspondante à deux heures de consignes respectives, en comparant la durée calculer pour passer de l'une des température de consigne à l'autre température de consigne à la durée entre les deux heures de consigne.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un schéma générique d'un dispositif selon l'invention dans son environnement,
- la figure 2 représente un diagramme en exemple d'une fonction du dispositif de la figure 1,
- la figure 3 représente un diagramme en exemple d'une autre fonction du dispositif de la figure 1,
- la figure 4 représente un diagramme électrique d'un premier modèle utilisé par le dispositif de la figure 1, et
- la figure 5 représente un diagramme électrique d'un deuxième modèle utilisé par le dispositif de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

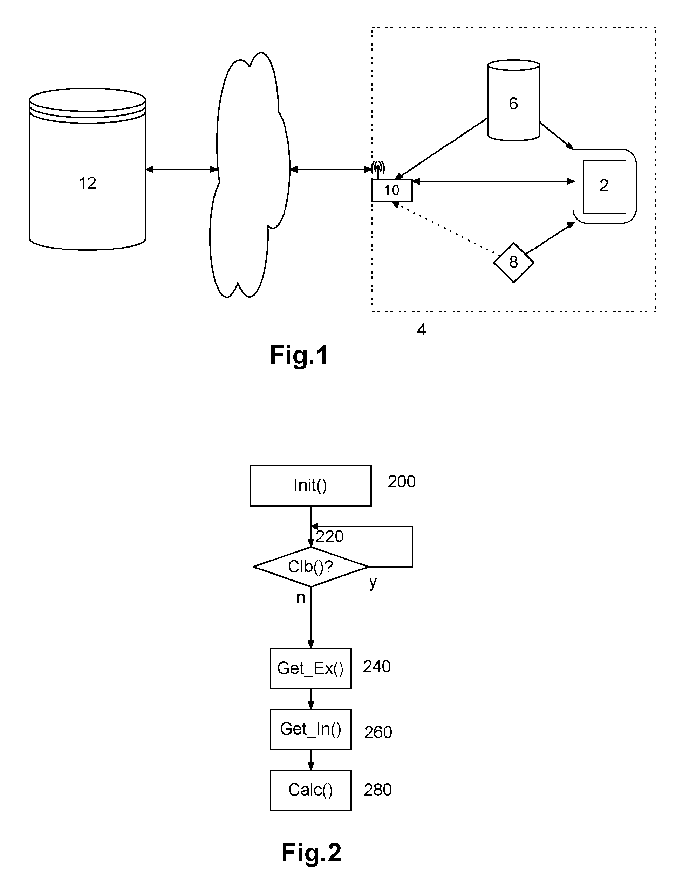

La figure 1 représente un schéma générique d'un dispositif de gestion thermique 2 selon l'invention dans son environnement. Le dispositif 2 est un appareil électronique utilisé dans un logement 4. Le logement 4 reçoit en outre un ensemble de chauffage 6, une sonde de température intérieure 8 et un dispositif d'accès à Internet 10.

Le dispositif de gestion thermique 2 est dans l'exemple décrit ici un appareil qui présente une interface utilisateur, un processeur, un stockage et un ou plusieurs moyens d'entrée pour permettre à un utilisateur d'indiquer une température de consigne pour laquelle il souhaite connaître le temps de chauffage nécessaire.

L'interface utilisateur peut être tout affichage classique du type écran, ou encore un dispositif de restitution sonore, ou toute autre interface adaptée.

Le processeur est choisi en fonction des fonctionnalités assurées par le dispositif de gestion thermique 2. Ainsi, s'il s'agit uniquement d'afficher une durée pour atteindre une température de consigne, un simple DSP ou microcontrôleur. À l'inverse, si les fonctions du dispositif de gestion thermique 2 sont mises en oeuvre par le biais d'une application sur un dispositif électronique comme un téléphone portable ou une tablette, le processeur pourra être beaucoup plus puissant. D'autres processeurs pourront également être envisagés en fonction des besoins en puissance de calcul du dispositif de gestion thermique 2.

Le stockage peut être tout moyen de stocker des informations : de la mémoire Flash, de la mémoire RAM, un disque dur, une connexion à un stockage déporté dans le logement 4 ou dans le cloud, etc.

Les moyens d'entrée peuvent être réalisés de toute manière connue, par exemple par des boutons, par un clavier tactile, par un clavier ou autre moyen de saisie déporté relié de manière filaire ou sans-fil au processeur du dispositif de gestion thermique 2.

L'ensemble de chauffage 6 comprend tous les dispositifs qui consomment de l'énergie, qui peuvent être commandés, et qui servent à chauffer le logement 4. L'ensemble de chauffage 6 peut donc être un ou plusieurs radiateurs électriques, un ensemble chaudière à gaz et un ou plusieurs radiateurs à eau, une combinaison des deux, ou avec tout autre dispositif ou ensemble de chauffage. L'ensemble de chauffage 6 comprend des moyens de communication filaires ou sans fil avec le dispositif de gestion thermique 2 et/ou avec la sonde de température intérieure 8 et/ou avec le dispositif d'accès à Internet 10.

La sonde de température intérieure 8 peut être réalisée au moyen d'une sonde thermique simple, d'un thermostat ou de tout autre capteur de température. La sonde de température intérieure 8 comprend des moyens de communication filaires ou sans fil avec le dispositif de gestion thermique 2 et/ou avec l'ensemble de chauffage 6 et/ou avec le dispositif d'accès à Internet 10.

Le dispositif de gestion thermique 2, l'ensemble de chauffage 6 et la sonde de température intérieure 8 sont reliés au dispositif d'accès à Internet, de sorte qu'ils peuvent échanger des données et/ou des commandes de pilotage. En variante, l'ensemble de chauffage 6 et la sonde de température 8 sont reliés au dispositif d'accès à Internet 10 à travers le dispositif de gestion thermique 2. Dans ce cas, la connexion entre d'une part l'ensemble de chauffage 6 et la sonde de température 8, et d'autre part le dispositif d'accès à Internet 10 est optionnelle. Toujours en variante, le dispositif de gestion thermique 2 et le dispositif d'accès à Internet 10 forment un seul dispositif.

Dans l'exemple décrit ici, le dispositif d'accès à Internet 10 est relié par Internet (représenté par un nuage) à un serveur 12. Comme on le verra plus bas, le serveur 12 peut assister dans la configuration du dispositif de gestion thermique 2, ou fournir des données de température extérieure et/ou de rayonnement thermique, ou être optionnel.

Comme cela apparaîtra mieux avec la description de la figure 2, le dispositif de gestion thermique 2 permet de déterminer une durée nécessaire à l'obtention d'une température de consigne.

La figure 2 représente un diagramme en exemple d'une fonction de calcul de la durée jusqu'à l'obtention d'une température de consigne, ci-après appelée Tm().

La fonction Tm() commence par une opération 200 dans laquelle une fonction Init() est exécutée. La fonction Init() vise à assurer que tous les éléments avec lesquels la connexion est nécessaire sont accessibles, comme l'ensemble de chauffage 6, la sonde de température intérieure 8 et le dispositif d'accès Internet 10.

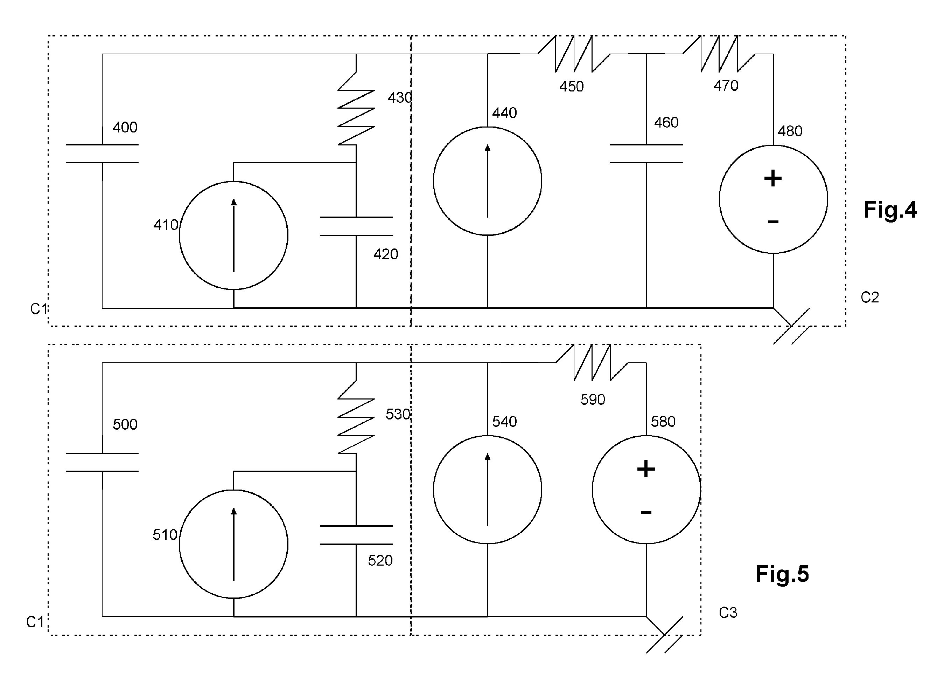

Ensuite, dans une opération 220, une fonction Clb() est exécutée pour déterminer si une calibration du dispositif de gestion thermique 2 est nécessaire. Comme on le verra avec les figures 5 et 6, le dispositif de gestion thermique 2 est agencé pour calculer la durée jusqu'à l'obtention d'une température de consigne à partir d'un modèle électrique de type RC des échanges thermiques dans le logement 4.

Pour que ce modèle soit pertinent, il faut que les valeurs des éléments du circuit modélisant le logements soient adaptées en fonction des caractéristiques des éléments thermiques du logement 4, c'est-à-dire de manière non exhaustive l'inertie thermique de l'intérieur du logement 4, la capacité de chauffe de l'ensemble de chauffage 6, l'inertie thermique de l'ensemble de chauffage 6, la conduction thermique entre l'intérieur du logement 4 et l'ensemble de chauffage 6, la surface vitrée du logement 4, la conduction thermique entre l'intérieur du logement 4 et l'air extérieur, l'inertie thermique de l'enveloppe du logement 4, conduction thermique entre l'intérieur du logement 4 et l'enveloppe du logement 4, la conduction thermique entre l'enveloppe du logement 4 et l'air extérieur, etc.

La fonction Clb() peut être mise en oeuvre de plusieurs manières. Selon une première variante, les valeurs paramétriques du modèle électrique de type RC sont calculées par application d'un filtre de Kalman. Cette méthode d'estimation statistique caractérise ainsi la dynamique d'une série temporelle à travers des constantes physiques. Pour cela, la fonction Clb() peut utiliser des séries de température intérieure fournies par le dispositif de gestion thermique 2 ou utiliser des séries de mesures tirées de la sonde de température intérieure 8. Cette calibration est de préférence mise en oeuvre par communication avec le serveur 12. En effet, le serveur 12 peut servir de base de données permettant de regrouper toutes les données de calibration existantes, et permettre de calculer les valeurs paramétriques sur la base d'un nombre restreint d'échantillons dans la série temporelle, par exemple en renseignant certains paramètres comme la capacité de chauffe de l'ensemble de chauffage 6, en estimant la conduction thermique entre l'intérieur du logement 4 et l'ensemble de chauffage 6 à partir de caractéristiques du logement 4, etc. En variante, cette calibration est mise en oeuvre par le dispositif de gestion thermique 2 seul. Selon une deuxième variante, l'utilisateur rentre certains au moins ou la totalité des valeurs paramétriques du modèle électrique de type RC, soit à partir de valeurs de conversion disponibles pour chacun des éléments du modèle ou encore par entrée de caractéristiques connues comme la puissance de chauffe de l'ensemble de chauffage 6, et conversion par le dispositif de gestion thermique 2 de cette valeur en sa valeur paramétrique correspondante.

Il convient de noter qu'en variante, l'utilisateur peut forcer l'exécution de la fonction Clb() au moyen d'une remise à zéro accessible depuis l'interface utilisateur.

Une fois la calibration réalisée, la fonction Tm() se poursuit dans une opération 240 par l'exécution d'une fonction Get_Ex(). La fonction Get_Ex() a pour rôle de récupérer ou d'inférer tous les paramètres extrinsèques du modèle électrique de type RC, comme la température extérieure, ou l'ensoleillement extérieur. Cela peut par exemple être réalisé par connexion avec une sonde de température extérieure, ou par communication avec le serveur 12 ou un autre serveur pour connaître la température extérieure du lieu du logement 4. Parallèlement, ou après l'exécution de la fonction Get_Ex(), une fonction Get_In() est exécutée dans une opération 260. La fonction Get_In() a pour rôle de récupérer ou d'inférer tous les paramètres intrinsèques du modèle électrique de type RC, comme la température intérieure de départ, la température de départ de l'ensemble de chauffe 6, ou la température de départ de l'enveloppe du logement 4. Cela peut par exemple être réalisé par connexion avec la sonde de température intérieure 8, ou par interpolation ou extrapolation à partir de températures enregistrées précédemment.

Enfin, dans une opération 280, une fonction Calc() est exécutée afin de déterminer la durée jusqu'à l'obtention d'une température intérieure de consigne. Cela est réalisé dans l'exemple décrit ici par itération successives du modèle électrique de type RC sur la base des paramètres obtenus en sortie des fonctions Get_Ex() et Get_In(). En variante, la fonction d'évolution du modèle électrique de type RC est inversée, de sorte que l'entrée des paramètres extrinsèques et intrinsèques retourne la durée recherchée. Toujours en variante, ce calcul est réalisé au moyen d'une table de recherche (look-up table en anglais) qui contient tous les n-uplets possibles.

La figure 4 représente un premier modèle électrique de type RC utilisé par le dispositif de gestion thermique 2. Dans cet exemple, le logement 4 est modélisé par deux circuits interconnectés C1 et C2 tous deux reliés à la masse dans leur partie inférieure, dans lesquels la température est assimilée à une tension et le rayonnement thermique à une intensité. Le circuit C1 modélise les interactions thermiques à l'intérieur du logement 4 tandis que le circuit C2 modélise les interactions thermiques avec l'extérieur du logement 4.

Le circuit C1 comprend une capacité 400, une source de courant 410, une capacité 420 et une résistance 430. La capacité 400 représente l'inertie thermique de l'intérieur du logement 4, la source de courant 410 représente le rayonnement thermique de l'ensemble de chauffage 6, la capacité 420 représente l'inertie thermique de l'ensemble de chauffage 6, et la résistance 430 représente la conductivité thermique entre l'air intérieur du logement 4 et l'ensemble de chauffage 6. La température intérieure est la tension aux bornes de la capacité 400, et la température de l'ensemble de chauffage 6 est la tension aux bornes de la capacité 420.

Le circuit C2 comprend une source de courant 440, une résistance 450, une capacité 460, une résistance 470 et une source de tension 480. La source de courant 440 représente le rayonnement thermique dû à l'ensoleillement en fonction de la surface des fenêtres du logement 14 et éventuellement de leur orientation et de l'heure, la résistance 450 représente la conductivité thermique entre l'air intérieur du logement 4 et l'enveloppe du logement 4, la capacité 460 représente l'inertie thermique de l'enveloppe du logement 4, la résistante 470 représente la conductivité thermique entre l'enveloppe du logement 4 et l'air extérieur, et la source de tension 480 représente la température extérieure. La température d'enveloppe est la tension aux bornes de la capacité 460.

Le modèle de la figure 4 présente ainsi trois variables d'état, qui sont la température intérieure, la température de l'ensemble de chauffage 6 et la température d'enveloppe.

Les paramètres extrinsèques sont ici l'ensoleillement du lieu du logement 4 et la température de l'air extérieur, tandis que les paramètres intrinsèques sont la température de consigne, la température intérieure de départ, la température de départ de l'ensemble de chauffage 6 et la température de départ de l'enveloppe du logement 4.

La figure 5 représente un deuxième modèle électrique de type RC utilisé par le dispositif de gestion thermique 2. Dans cet exemple, le logement 4 est modélisé par deux circuits interconnectés C1 et C3 tous deux reliés à la masse dans leur partie inférieure, dans lesquels la température est assimilée à une tension et le rayonnement thermique à une intensité. Le circuit C1 modélise les interactions thermiques à l'intérieur du logement 4 tandis que le circuit C3 modélise les interactions thermiques avec l'extérieur du logement 4.

Ce modèle est plus simple en ce que les interactions thermiques avec l'extérieur du logement 4 ont été simplifiées en supprimant l'enveloppe. Le circuit C1 est ainsi identique à celui de la figure 4, et d'une manière générale, les éléments de la figure 4 et de la figure 5 qui présentent des numéros de référence dont les deux derniers chiffres sont identiques sont les mêmes. Le circuit C3 se distingue du circuit C2 en ce que la résistance 450, la capacité 460, et la résistance 470 ont été remplacées par une unique résistance 590, qui représente la conductivité thermique entre l'air intérieur du logement 4 et l'air extérieur.

Le modèle de la figure 5 présente ainsi deux variables d'état, qui sont la température intérieure, et la température de l'ensemble de chauffage.

Les paramètres extrinsèques sont ici l'ensoleillement du lieu du logement 4 et la température de l'air extérieur, tandis que les paramètres intrinsèques sont la température de consigne, la température intérieure de départ et la température de départ de l'ensemble de chauffage 6.

Cependant, le dispositif de gestion thermique 2 peut être utilisé pour bien d'autres choses que le simple affichage de la durée d'obtention d'une température de consigne.

En effet, un utilisateur peut indiquer par le dispositif de gestion thermique 2 plusieurs plages horaires distinctes, ainsi que les températures de consigne pour chacune de ces plages.

Cela ressemble aux fonctions classiques dans les thermostats. Cependant, avec un thermostat classique, la température de consigne n'est pas toujours atteinte au sein de chaque plage horaire. Dans la pratique, à chaque début de plage, le thermostat détermine s'il doit activer ou pas l'ensemble de chauffage 6 pour atteindre la température de consigne ou rester proche de celle-ci. Il n'est donc pas rare que la température de consigne ne soit jamais atteinte lorsqu'il existe un trop grand différentiel entre les températures de consigne de deux plages horaires successives. Pour compenser cela, les utilisateurs qui ne souhaitent pas avoir froid lorsqu'ils rentrent chez eux ont tendance à élargir la plage horaire correspondant à la température de consigne la plus chaude, de sorte que le thermostat commence à chauffer le logement 4 avant leur arrivée. En combinaison, ils ont également tendance à augmenter la température de consigne la plus froide, afin que l'écart ne soit pas trop important. D'où des approximations et un gaspillage d'énergie conséquent.

À l'inverse, comme la fonction Tm() permet de déterminer le temps nécessaire au passage entre deux températures, le chauffage du logement 4 peut être piloté non plus en plages horaires, comme avec les thermostats, mais bien en température. En effet, il devient possible de piloter au plus juste la commande de l'ensemble de chauffage 6 de sorte que chaque température de consigne de chaque plage horaire est bien obtenue, dès le début de la plage concernée, tout en minimisant la température du logement 4 (et donc la consommation d'énergie) dans la plage horaire précédente.

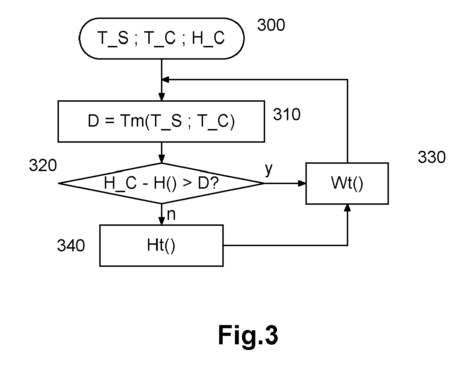

La figure 3 représente un exemple d'une telle fonction.

Dans une opération 300, le dispositif de gestion thermique 2 reçoit une température intérieure de départ T_H, une température intérieure de consigne T_C et une heure de consigne H_C.

Ensuite, commence une boucle de commande de l'ensemble de chauffage 6. Dans une opération 310, la fonction Tm() de la figure 2, ou une variante, utilise la température intérieure de départ T_S et la température intérieure de consigne T_C pour déterminer une durée D nécessaire au passage de la température T_S vers la température T_C. Ensuite, dans une opération 320, la durée D est comparée à la différence entre l'heure courante H, obtenue par une fonction H() et l'heure de consigne H_C. Si la valeur (H - H_C) est supérieure à D, alors il n'est pas nécessaire d'activer l'ensemble de chauffage 6, et il est possible de laisser le logement 4 se refroidir. Une fonction Wt() est alors exécutée dans une opération 330 et la boucle reprend avec l'opération 310. Dans le cas contraire, il faut activer l'ensemble de chauffage 6 afin de commencer à réchauffer le logement 4 avec une fonction Ht() exécutée dans une opération 340. Selon une première variante, la fonction Ht() optimise l'activation de l'ensemble de chauffage 6 afin de consommer le moins d'énergie possible, et la fonction se poursuit avec l'opération 330 puis la boucle reprend avec l'opération 310. En variante, l'attente suite à l'opération 340 peut être différente de celle de l'opération 330. Toujours en variante, la fonction Ht() utilise au maximum les capacités de chauffe de l'ensemble de chauffe 6, et la boucle s'arrête après l'opération 340 car il faudra tout le temps restant pour réchauffer le logement 4 jusqu'à la température de consigne T_C.

D'autres fonctions peuvent également être mises en oeuvre. Par exemple, le dispositif de gestion thermique 2 peut prévenir un utilisateur lorsqu'il rentre des couples (température de consigne, plage horaire) successives qui sont incompatibles entre elles, par exemple en interpolant les paramètres extrinsèques aux plages horaires considérées.

La modélisation offerte par le dispositif de gestion thermique 2 pourra encore être utilisée dans d'autres fonctions. Cette modélisation est robuste, car elle ne dépend pas du passé des températures du logement 4, mais correspond à un véritable modèle thermique de celui-ci. Cela rend le dispositif de gestion thermique 2 à la fois beaucoup plus fiable, mais contre toute attente plus simple à mettre en oeuvre.

En outre, le dispositif décrit ci-dessus pourra également être adapté à des ensembles de chauffage de type climatisation ou de type climatisation / chauffage. Dans ce cas, Le modèle RC permet de modéliser la dynamique des températures du logement. Le schéma du circuit RC retenu ne change pas si l'on passe d'un mode chauffage à un mode climatisation, et seul le signe du flux de chaleur fourni par la climatisation doit être fixé à une valeur négative.

L'invention concerne également un procédé de calcul de durée, dans lequel une durée entre une température intérieure de départ et une température intérieure de consigne est calculée en appliquant un modèle électrique de type RC des échanges thermiques d'un bâtiment dans lequel la température est assimilée à une tension et le rayonnement thermique à une intensité et dans lequel une température intérieure et une température de chauffage sont utilisées comme variables d'état, le modèle comprenant un premier circuit et un second circuit interconnectés, le premier circuit représentant les échanges thermiques à l'intérieur du bâtiment et mettant en oeuvre une capacité thermique de chauffage, une résistance thermique intérieur-chauffage, une capacité thermique intérieure, et une source de rayonnement thermique de chauffage, le deuxième circuit représentant les échanges thermiques avec l'extérieur du bâtiment et mettant en oeuvre au moins une source de rayonnement thermique extérieur, une source de température extérieure et une résistance thermique.

## Revendications

1. Dispositif de gestion thermique (2) **caractérisé en ce qu'**il comprend un processeur, une entrée pour des données de température de consigne, de température intérieure, de température extérieure, et de rayonnement thermique extérieur, une sortie pour des données de durée, et un stockage recevant des données de modèle électrique de type RC des échanges thermiques d'un bâtiment (4) dans lequel la température est assimilée à une tension et le rayonnement thermique à une intensité et dans lequel une température intérieure et une température de chauffage sont utilisées comme variables d'état, le modèle comprenant un premier circuit et un second circuit interconnectés, le premier circuit (C1) représentant les échanges thermiques à l'intérieur du bâtiment et mettant en oeuvre une capacité thermique de chauffage (420, 520), une résistance thermique intérieur-chauffage (430, 530), une capacité thermique intérieure (400, 500), et une source de rayonnement thermique de chauffage (410, 510), le deuxième circuit (C2, C3) représentant les échanges thermiques avec l'extérieur du bâtiment (4) et mettant en oeuvre au moins une source de rayonnement thermique extérieur (440, 540), une source de température extérieure (480, 580) et une résistance thermique (450, 590), le processeur étant adapté pour appliquer le modèle RC avec les données de température intérieure, de température extérieure et de rayonnement thermique extérieur reçus en entrée pour déterminer une durée restante jusqu'à obtention d'une température correspondant aux données de température de consigne reçue en entrée, et pour retourner sur la sortie des données de durée restante.

2. Dispositif selon la revendication 1, dans lequel, dans le deuxième circuit (C2, C3), la source de rayonnement thermique extérieur (440, 540) et la source de température extérieure (480, 580) sont en parallèle.

3. Dispositif selon la revendication 2, dans lequel, dans le deuxième circuit (C3), la résistance thermique est une résistance thermique intérieur-extérieur (590) disposées entre la source de rayonnement thermique extérieur (540) et la source de température extérieure (580).

4. Dispositif selon la revendication 2, dans lequel le deuxième circuit (C2) comprend en outre une capacité thermique d'enveloppe (460) et une résistance thermique enveloppe-extérieur (470), la résistance thermique (450) étant une résistance thermique intérieur-enveloppe, la résistance thermique intérieur-enveloppe (450) et la résistance thermique enveloppe-extérieur (470) étant disposées en série entre la source de rayonnement thermique extérieur (440) et la source de température extérieure (480), et la capacité thermique d'enveloppe (460) étant en parallèle avec la source de rayonnement thermique extérieur (440) et la source de température extérieure (480) et reliée entre la résistance thermique intérieur-enveloppe (450) et la résistance thermique enveloppe-extérieur (470).

5. Dispositif selon l'une des revendications précédentes, dans lequel, dans le premier circuit (C1), la capacité de chauffage (420, 520) et la résistance thermique intérieur-chauffage (430, 530) sont en série, la capacité thermique intérieure (400, 500) étant disposée en parallèle avec ces dernières, et la source de rayonnement thermique de chauffage (410, 510) étant relié en parallèle à la capacité thermique de chauffage (420, 520) aux bornes de celle-ci.

6. Dispositif selon l'une des revendications 1 à 5, dans lequel le premier circuit (C1) et le deuxième circuit (C2, C3) présentent une masse commune.

7. Dispositif selon l'une des revendications précédentes, agencé pour communiquer avec un serveur (12) pour déterminer des paramètres du modèle RC et/ou pour recevoir des données de rayonnement thermique extérieur et/ou de température extérieure.

8. Dispositif selon l'une des revendications 1 à 6, dans lequel le processeur est agencé pour déterminer des paramètres du modèle RC et/ou pour recevoir des données de rayonnement thermique extérieur et/ou de température extérieure de capteurs à proximité du bâtiment (4).

9. Dispositif selon l'une des revendications précédentes, dans lequel le processeur est agencé pour émettre une consigne de chauffage en fonction d'une température de consigne et d'une heure de consigne, sur la base de la comparaison entre la durée déterminée par le processeur pour atteindre la température de consigne et de la différence entre l'heure de consigne et l'heure courante.

10. Dispositif selon l'une des revendications précédentes, dans lequel le processeur est agencé pour vérifier la compatibilité entre deux températures de consignes correspondante à deux heures de consignes respectives, en comparant la durée calculer pour passer de l'une des température de consigne à l'autre température de consigne à la durée entre les deux heures de consigne.
